# EUROPEAN PATENT APPLICATION

(11) **EP 4 317 737 A1**
(43) Date of publication of application: **07.02.2024**
(21) Application number: 22775262.3
(22) Date of filing: 15.03.2022
(51) Int. Cl.: F16F 9/19, F16F 9/32, F16F 9/34, F16F 9/46

(54) **FLUID PRESSURE SHOCK ABSORBER**

(30) Priority: 23.03.2021 JP 2021049215
(71) Applicant: KYB Corporation, Minato-ku, Tokyo 105-5128 (JP)
(72) Inventor: HASEGAWA, Kazuki, Tokyo 105-5128 (JP)
(74) Representative: Grünecker Patent- und Rechtsanwälte PartG mbB
(86) International application number: PCT/JP2022/011525
(87) International publication number: WO 2022/202472

(57) **Abstract**

A shock absorber (100) includes: a cylinder tube (10); a piston rod (20) inserted into the cylinder tube (10) so as to be freely movable back and forth; a piston (30) connected to the piston rod (20), the piston (30) being configured to partition an interior of the cylinder tube (10) into a rod-side chamber (2) and a bottom-side chamber (1); and a damping unit (50) configured to generate a damping force by imparting resistance to flow of working fluid between the rod-side chamber (2) and the bottom-side chamber (1), wherein the piston rod (20) has a rod portion (21) connected to the piston (30) and supported so as to be feely slidable with respect to the cylinder tube (10) and a head portion (23) exposed to the outside of the cylinder tube (10), and wherein the damping unit (50) is provided in the head portion (23) of the piston rod (20).

## Description

### TECHNICAL FIELD

The present invention relates to a fluid pressure dumper.

### BACKGROUND ART

In a fluid pressure dumper described in JP2015-206374A, a piston rod has a rod portion that extends outside a cylinder and a piston that is connected to an end portion of the rod portion, freely slidably moves within the cylinder, and partitions an interior of the cylinder into a bottom-side chamber and a rod-side chamber. The rod portion has: a rod inner space that is formed in the rod portion and communicates with the bottom-side chamber of the cylinder; a first communicating passage that connects the rod inner space and the rod-side chamber of the cylinder; and an orifice plug that is provided in the first communicating passage in a changeable manner.

### SUMMARY OF INVENTION

The fluid pressure dumper described in JP2015-206374A is configured such that a damping force can be generated with a compact configuration by providing the orifice plug in the first communicating passage formed in the rod portion.

On the other hand, in a case when various damping characteristics are to be achieved in the fluid pressure dumper, for example, the configuration of the damping unit for generating the damping force may be increased in size and become complex. In such a case, it is required to secure an installation space for the damping unit.

An object of the present invention is to provide a fluid pressure dumper that is capable of securing an installation space for a damping unit.

According to one aspect of the present invention, a fluid pressure dumper includes: a cylinder tube; a piston rod inserted into the cylinder tube so as to be freely movable into and out of the cylinder tube; a piston connected to the piston rod, the piston being configured to partition an interior of the cylinder tube into a rod-side chamber and a bottom-side chamber; and a damping unit configured to generate damping force by imparting resistance to a flow of working fluid between the rod-side chamber and the bottom-side chamber, wherein the piston rod has a rod portion connected to the piston and supported so as to be feely slidable with respect to the cylinder tube and a head portion exposed to outside of the cylinder tube, and wherein the damping unit is provided in the head portion of the piston rod.

### BRIEF DESCRIPTION OF DRAWINGS

[FIG. 1] FIG. 1 is a sectional view of a shock absorber according to a first embodiment of the present invention.
[FIG. 2] FIG. 2 is an enlarged sectional view showing a configuration around a head portion of the shock absorber according to the first embodiment.
[FIG. 3] FIG. 3 is a configuration diagram schematically showing a damping unit according to a modification of the first embodiment.
[FIG. 4] FIG. 4 is a sectional view of the shock absorber according to a second embodiment.
[FIG. 5] FIG. 5 is a configuration diagram schematically showing the damping unit of the second embodiment.
[FIG. 6] FIG. 6 is a configuration diagram schematically showing the damping unit according to a modification of the second embodiment.

### DESCRIPTION OF EMBODIMENTS

In the following, a fluid pressure dumper according to respective embodiments of the present invention will be described with reference to the drawings.

### (First Embodiment)

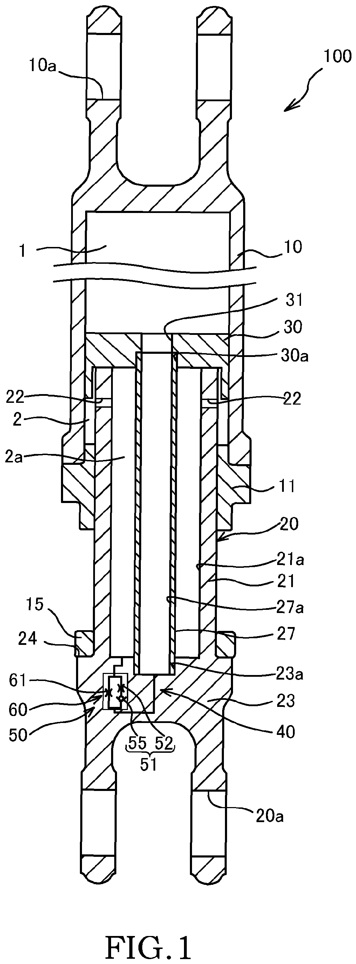

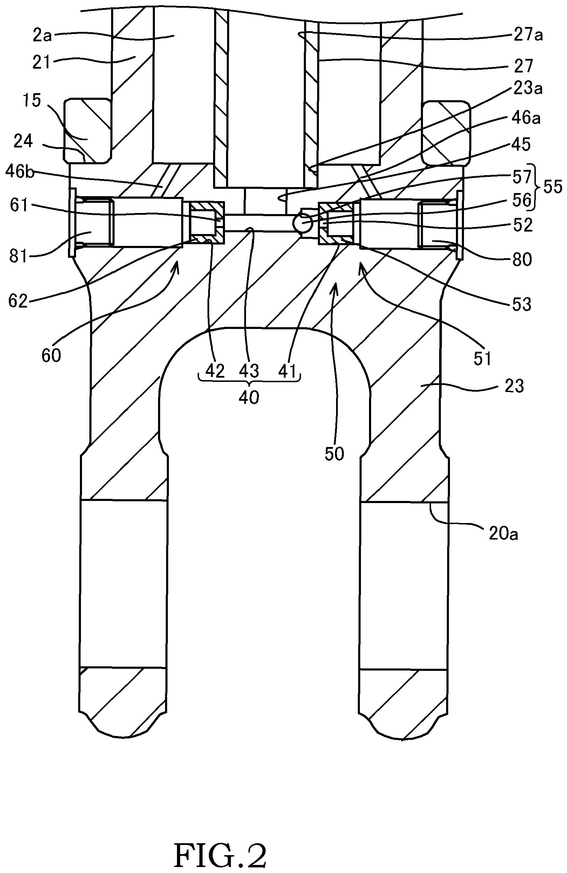

A fluid pressure dumper according to a first embodiment will be described with reference to FIGs. 1 and 2. In the following, a case in which the fluid pressure dumper is a shock absorber 100 that is installed on a vehicle will be described.

The shock absorber 100 is device that suppresses vibration of a vehicle body by, for example, being interposed between the vehicle body and an axle shaft of the vehicle and by generating a damping force.

As shown in FIG. 1, the shock absorber 100 includes a tubular cylinder tube 10, a piston rod 20 that is inserted into the cylinder tube 10 so as to be freely movable into and out of the cylinder tube 10 and that extends outside the cylinder tube 10, and a piston 30 that is connected to a tip end of the piston rod 20 and that is freely slidably moved along an inner circumferential surface of the cylinder tube 10. In this embodiment, the shock absorber 100 is installed on the vehicle in an orientation at which the cylinder tube 10 is positioned at the upper side and the piston rod 20 is positioned at the lower side.

The interior of the cylinder tube 10 is partitioned by the piston 30 into a bottom-side chamber 1 and a rod-side chamber 2. The bottom-side chamber 1 and the rod-side chamber 2 are respectively filled with working oil serving as working fluid. In addition, although not shown in the figures, in the bottom-side chamber 1, a gas for achieving a spring effect by utilizing a volume change in the cylinder tube 1 due to inward and outward movement of the piston rod 20 relative to the cylinder tube 10 is sealed together with the working oil. As described above, the shock absorber 100 is the fluid pressure dumper that has a function of an air-suspension that is capable of supporting the vehicle body by the spring effect utilizing the gas. In this case, even if a spring for supporting the vehicle body is not provided separately, it is possible to achieve generation of the damping force and support of the vehicle body by the shock absorber 100.

Note that, the configuration is not limited to those described above, and the gas may not be sealed in the cylinder tube 10. In addition, it may be possible to provide a free piston that is provided inside the bottom-side chamber 1 so as to be freely movable and that partitions the bottom-side chamber 1 into a liquid chamber, into which the working oil is filled, and a gas chamber, into which the gas is sealed. In this case, the piston 30 is configured so as to face the liquid chamber. By providing the free piston, the gas in the gas chamber is not guided to a damping unit 50, which will be described later, and so, the shock absorber 100 is allowed to be used in an orientation in which the cylinder tube 10 is positioned at the lower side and the piston rod 20 is positioned at the upper side. In other words, the orientation of the shock absorber 100 in the vertical direction is not limited.

The cylinder tube 10 is a member having a bottomed tube shape, and an opening end thereof is closed by a cylinder head 11 through which the piston rod 20 is inserted so as to be freely slidable. The cylinder head 11 is fixed to the cylinder tube 10 by being fastened to an end portion of the cylinder tube 10 by a bolt (not shown). On an inner circumferential surface of the cylinder head 11, a seal member (not shown) and a dust seal (not shown), which are in sliding contact with an outer circumferential surface of the piston rod 20, are provided.

On a closed end of the cylinder tube 10 (an end portion on the opposite side from the cylinder head 11), an attachment portion 10a for attaching the shock absorber 100 to the vehicle is provided.

The piston rod 20 has a rod portion 21 that is connected to the piston 30 and supported so as to be feely slidable with respect to the cylinder head 11 of the cylinder tube 10, a head portion 23 that is exposed to the outside of the cylinder tube 10, and a pipe portion 27 serving as a flow path portion that is provided inside the rod portion 21.

In the rod portion 21, a depressed portion 21a that opens at the end surface on the piston 30 side is formed. In the rod portion 21, a rod inner chamber 2a serving as a rod inner space is formed by the depressed portion 21a. An end portion of the rod portion 21 is connected to the piston 30 by a bolt (not shown).

The head portion 23 is formed to have a diameter larger than that of the rod portion 21, and the head portion 23 is always exposed to the outside of the cylinder tube 10 regardless of an extension/contraction state of the shock absorber 100 (in other words, regardless of a stroke position of the piston rod 20 relative to the cylinder tube 10). Expressed from the other viewpoint, the head portion 23 is a portion of the piston rod 20 that does not slide against the cylinder head 11. For example, the head portion 23 is formed as a separate piece from the rod portion 21 and it is connected to an end portion of the rod portion 21 by welding, etc. Note that, the rod portion 21 and the head portion 23 are not limited to the configuration in which they are formed separately and connected together, and they may be formed integrally.

The head portion 23 is provided with a stopper portion 24 that defines a stroke end during contraction of the shock absorber 100 and an attachment portion 20a for attaching the shock absorber 100 to the vehicle. The stopper portion 24 is provided with an annular cushion ring 15 that prevents collision between the cylinder head 11 and the piston rod 20 at the stroke end during the contraction of the shock absorber 100.

The pipe portion 27 is a cylindrical tube member in which a through hole 27a is formed so as to extend along the shaft center direction. The through hole 27a of the pipe portion 27 communicates with the bottom-side chamber 1 via a piston passage 31 that is formed in the piston 30.

An one end of the pipe portion 27 is inserted into an insertion hole 23a formed in the head portion 23 and the other end thereof is inserted into an insertion hole 30a formed in the piston 30. As described above, the pipe portion 27 is provided so as to be sandwiched between the head portion 23 and the piston 30. In a gap between the pipe portion 27 and the insertion hole 23a of the head portion 23 and a gap between the pipe portion 27 and the insertion hole 30a of the piston 30, O rings (not shown) for sealing the gaps are respectively provided.

The rod inner chamber 2a is formed as an annular space by an outer circumferential surface of the pipe portion 27, an inner circumferential surface of the rod portion 21, the head portion 23, and the piston 30. The rod inner chamber 2a communicates with the rod-side chamber 2 via a plurality of first communicating passages 22 that are formed in the rod portion 21 of the piston rod 20. The plurality of first communicating passages 22 are formed so as to be aligned in the circumferential direction of the rod portion 21 and so as to radially penetrate the rod portion 21 to open at the inner circumferential surface and at the outer circumferential surface of the rod portion 21. By providing the rod inner chamber 2a, the working oil in the rod inner chamber 2a is readily guided to the rod-side chamber 2 when the shock absorber 100 is contracted at a high speed and when the shock absorber 100 is contracted from a most-extended state. With such a configuration, a sudden pressure drop in the rod-side chamber 2 is suppressed.

The shock absorber 100 is further provided with the damping unit 50 that generates the damping force by imparting resistance to a flow of the working oil between the rod-side chamber 2 and the bottom-side chamber 1. The damping unit 50 is provided inside the head portion 23 of the piston rod 20.

As shown in FIG. 2, the head portion 23 is formed with an accommodating hole 40 that accommodates the damping unit 50, a connecting hole 45 through which the accommodating hole 40 is communicated with the through hole 27a of the pipe portion 27, and second communicating passages 46a and 46b through which the accommodating hole 40 is communicated with the rod inner chamber 2a.

The bottom-side chamber 1 and the rod-side chamber 2 are communicated through a flow path formed by the piston passage 31 (see FIG. 1), the through hole 27a in the pipe portion 27, the connecting hole 45, the accommodating hole 40, the second communicating passages 46a and 46b, the rod inner chamber 2a, and the first communicating passages 22 (see FIG. 1). As described above, the shock absorber 100 is of a so-called internal piping type in which the flow path, through which the bottom-side chamber 1 is communicated with the rod-side chamber 2, is provided inside the shock absorber 100. The shock absorber 100 may also be of a so-called external piping type in which a part of the flow path, through which the bottom-side chamber 1 is communicated with the rod-side chamber 2, is provided outside the shock absorber 100.

As shown in FIGs. 1 and 2, the damping unit 50 has a first resistance portion 51 and a second resistance portion 60 that respectively impart the resistance to the flow of the working oil.

The first resistance portion 51 imparts the resistance only to the flow of the working oil flowing from the bottom-side chamber 1 towards the rod-side chamber 2. The first resistance portion 51 has a first orifice 52 serving as a first restrictor portion that generates the damping force by imparting the resistance to the working oil passing therethrough and a check valve 55 that only allows the flow of the working oil flowing from the bottom-side chamber 1 towards the rod inner chamber 2a.

The second resistance portion 60 imparts the resistance to the flow of the working oil between the bottom-side chamber 1 and the rod-side chamber 2 in both directions. The second resistance portion 60 has a second orifice 61 serving as a second restrictor portion that generates the damping force by imparting the resistance to the working oil passing therethrough.

As shown in FIG. 1, the first resistance portion 51 and the second resistance portion 60 are provided in parallel with each other. In the first resistance portion 51, the check valve 55 is provided at the position closer to the bottom-side chamber 1 than the first orifice 52 in the flow of the working oil.

In the following, the specific configuration of the damping unit 50 will be described with main reference to FIG. 2.

As shown in FIG. 2, the damping unit 50 is provided inside the head portion 23 by being accommodated in the accommodating hole 40 formed in the head portion 23 of the piston rod 20.

The damping unit 50 has a first orifice plug 53, in which the first orifice 52 is provided, and a second orifice plug 62, in which the second orifice 61 is provided.

The accommodating hole 40 in the head portion 23 is formed with a first accommodating portion 41 that accommodates the first orifice plug 53 and the check valve 55, a second accommodating portion 42 that accommodates the second orifice plug 62, and a communicating portion 43 through which the first accommodating portion 41 and the second accommodating portion 42 are communicated. The first accommodating portion 41 and the second accommodating portion 42 respectively open at the outer surface of the head portion 23, and the respective openings are closed by plugs 80 and 81.

The check valve 55 has a ball body 56 serving as a valve body and a seat portion 57 on which the ball body 56 is seated. The seat portion 57 is formed at a step portion formed between the first accommodating portion 41 and the communicating portion 43. As the ball body 56 is seated on the seat portion 57, the flow of the working oil flowing from the first accommodating portion 41 towards the communicating portion 43 is shut off.

In addition, the head portion 23 is formed with the second communicating passages 46a and 46b through which the rod inner chamber 2a is communicated with the first accommodating portion 41 and the second accommodating portion 42.

The second communicating passage 46a is formed so as to open to the first accommodating portion 41 at between the first orifice plug 53 and the plug 80 that closes an opening of the first accommodating portion 41. The second communicating passage 46b is formed so as to open to the second accommodating portion 42 at between the second orifice plug 62 and the plug 81 that closes an opening of the second accommodating portion 42. In other words, along the flow of the working oil between the bottom-side chamber 1 and the rod-side chamber 2, the first orifice plug 53 is provided between the second communicating passage 46a and the communicating portion 43, and the second orifice plug 62 is provided between the second communicating passage 46b and the communicating portion 43.

When the shock absorber 100 is contracted, the pressure in the bottom-side chamber 1 is increased, and the working oil in the bottom-side chamber 1 is guided to the communicating portion 43 of the accommodating hole 40 via the pipe portion 27. A part of the working oil that has been guided to the communicating portion 43 is then guided to the rod inner chamber 2a from the second communicating passage 46a by opening the check valve 55 and passing through the first orifice 52, and a part of the remaining working oil is guided to the rod inner chamber 2a from the second communicating passage 46b by flowing through the second orifice 61. The working oil that has been guided to the rod inner chamber 2a is then guided to the rod-side chamber 2 via the first communicating passages 22. As described above, when the shock absorber 100 is contracted, the working oil in the bottom-side chamber 1 is guided to the rod-side chamber 2 by flowing through both of the first orifice 52 and the second orifice 61. Therefore, in the shock absorber 100, the damping force is generated correspondingly to an overall flow path resistance exerted by the first orifice 52 and the second orifice 61 together.

When the shock absorber 100 is extended, the pressure in the rod-side chamber 2 is increased, and the working oil in the rod-side chamber 2 is guided to the second accommodating portion 42 via the rod inner chamber 2a and the second communicating passage 46b. The working oil that has been guided to the second accommodating portion 42 is then guided to the bottom-side chamber 1 via the pipe portion 27 by passing through the second orifice 61.

On the other hand, because the check valve 55 is closed by the pressure increase in the rod-side chamber 2, the working oil in the rod-side chamber 2 is not guided to the bottom-side chamber 1 via the second orifice 61. Thus, when the shock absorber 100 is extended, the damping force is generated correspondingly to the flow path resistance exerted by the second orifice 61. Therefore, because the flow of the working oil from the bottom-side chamber 1 towards the rod-side chamber 2 via the first orifice 52 is allowed during the contraction, correspondingly, the shock absorber 100 can easily generate greater damping force during the extension than during the contraction. With such a configuration, in a case in which the vehicle drives over a bump on a road surface, the shock absorber 100 is contracted in a relatively smooth manner, and thereafter, the shock absorber 100 generates large damping force during extension, and thereby, the vibration exerted from the road surface to the vehicle body is effectively damped.

According to the above-described first embodiment, advantages described below are afforded.

With the shock absorber 100, the damping unit 50 is provided inside the head portion 23 of the piston rod 20. Compared with the rod portion 21, it is easier to secure a volume in the head portion 23, and in turn, it is easier to secure the installation space for the damping unit 50. Therefore, even if the damping unit 50 has a relatively complex configuration or a large-sized configuration, the damping unit 50 can be assembled into the shock absorber 100 with ease. Thus, it is possible to achieve various damping characteristics with the shock absorber 100.

In addition, in the shock absorber 100, because the damping unit 50 is provided in the head portion 23 of the piston rod 20 that is always exposed to the outside of the cylinder tube 10, compared with a case in which the damping unit 50 is provided in the rod portion 21 or the piston 30, it is possible to adjust the damping unit 50 without disassembling the shock absorber 100. Specifically, it is possible to easily change the damping characteristic of the shock absorber 100 by removing the plugs 80 and 81 that are exposed to the outside and by changing the first orifice plug 53 and the second orifice plug 62.

Next, modifications of this embodiment will be described. The modifications described below also fall within the scope of the present invention. It may also be possible to combine the following modifications with the respective configurations of the above-described embodiment, to combine the following modifications with the respective configurations of the respective embodiments, which will be described below, and to combine the following modifications with each other.

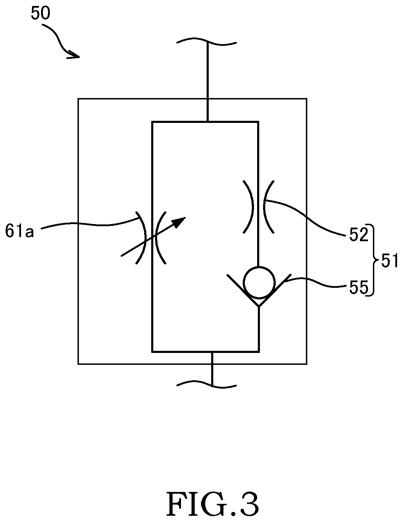

In the above-described embodiment, the first orifice 52 and the second orifice 61 are each a fixed orifice having a fixed flow path resistance. In contrast, the first orifice 52 and / or the second orifice 61 may be a variable orifice (a variable restrictor portion) having a variable flow path resistance. For example, as shown in FIG. 3, because the shock absorber 100 has a second orifice 61a that is the variable orifice, the damping force of the shock absorber 100 can be adjusted more easily. Although a specific description and illustration will be omitted for the configurations of the variable orifice and its adjustment mechanism because known configurations can be employed, they are configured such that, for example, an opening area (a flow path area) of the second orifice 61a can be adjusted by using a hand tool.

In addition, in the above-described embodiment, the first resistance portion 51 imparts the resistance only to the flow of the working oil flowing from the bottom-side chamber 1 towards the rod-side chamber 2. With such a configuration, in the shock absorber 100, the damping characteristics are different between the extension and the contraction. In contrast, the first resistance portion 51 may impart the resistance only to the flow of the working oil flowing from the rod-side chamber 2 towards the bottom-side chamber 1. In addition, the first resistance portion 51 may impart the resistance only to the flow of the working oil flowing from the bottom-side chamber 1 towards the rod-side chamber 2, and the second resistance portion 60 may impart the resistance only to the flow of the working oil flowing from the rod-side chamber 2 towards the bottom-side chamber 1. In this case, it is preferable that the first orifice 52 and the second orifice 61 have different damping characteristics from each other. Furthermore, the configuration in which the damping unit 50 has the first resistance portion 51 and the second resistance portion 60, which are provided in parallel with each other, is not essential, and the damping unit 50 may have any configuration depending on a desired damping force to be generated at the shock absorber 100. For example, the damping unit 50 may generate the damping force according to the same damping characteristics for the extension and contraction of the shock absorber 100.

### (Second Embodiment)

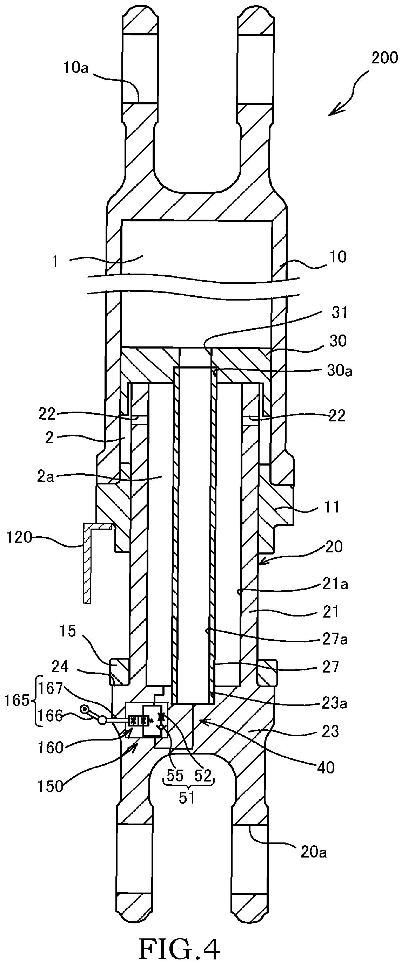

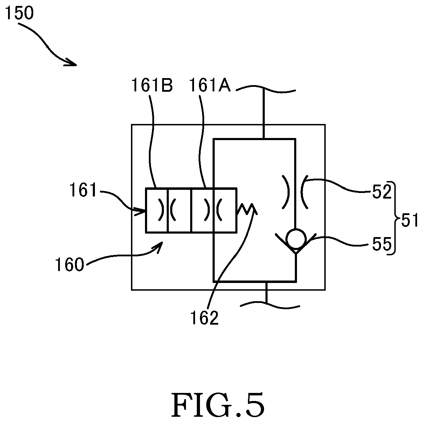

Next, a shock absorber 200 according to a second embodiment will be described with reference to FIGs. 4 and 5. In the following, differences from the above-described first embodiment will be mainly described, and components that are the same as those in the above-described first embodiment are assigned the same reference numerals and descriptions thereof will be appropriately omitted. Specifically, in the shock absorber 200 according to the second embodiment, a configuration of a damping unit 150 differs from that of the shock absorber 100 according to the first embodiment.

As shown in FIGs. 4 and 5, similarly to the first embodiment, the damping unit 150 of the shock absorber 200 according to the second embodiment has the first resistance portion 51 and a second resistance portion 160, which are provided in parallel with each other.

Because the configuration of the first resistance portion 51 is the same as that in the first embodiment, a description thereof will be omitted.

As shown in FIG. 5, the second resistance portion 160 has a damping valve 161, with which the resistance imparted to the passing flow of the working oil is changed in accordance with the position of the damping valve 161.

The damping valve 161 has a first restricting position 161A at which a predetermined resistance is imparted to the passing flow of the working oil and a second restricting position 161B at which the resistance is imparted to the passing flow of the working oil at a level different from that of the resistance imparted by the first restricting position 161A. In other words, the first restricting position 161A and the second restricting position 161B have different pressure loss characteristics for the passing flow of the working oil. The damping valve 161 has a valve body (not shown) for switching the position and a spring 162 serving as a biasing member for biasing the valve body. In the damping valve 161, the valve body is biased by the spring 162 so as to be positioned at the first restricting position 161A.

In addition, as shown in FIG. 4, the damping unit 150 has a switching portion 165 that switches the position of the damping valve 161 by being pushed by the cylinder tube 10 as the piston rod 20 enters inside the cylinder tube 10.

The switching portion 165 has a lever part 166 that projects out to the outside of the piston rod 20 and a push rod part 167 that pushes the valve body as the lever part 166 is switched. At least a part of the push rod part 167 is inserted into the head portion 23 of the piston rod 20.

In addition, in the second embodiment, as shown in FIG. 4, the cylinder head 11 of the cylinder tube 10 is provided with a projecting portion 120 that switches the lever part 166.

In general, in the shock absorber, a stroke region of the piston rod used may be different depending on situations of an object such as the vehicle or equipment to which the shock absorber is to be attached. In other words, for a given shock absorber, both of a situation in which the shock absorber is extended/contracted in a relatively extended state and a situation in which the shock absorber is extended/contracted in a relatively contracted state may be caused. For example, the stroke region of the shock absorber is different for a state in which the vehicle is loaded with a payload such as a person, a luggage, or the like and for a state in which the vehicle is not loaded. As described above, in a case in which the stroke region is different depending on the situations, it is desirable that the shock absorber is configured such that the damping characteristic thereof differs in accordance with the stroke region.

However, in the shock absorber 200, as shown in FIGs. 4 and 5, in the relatively extended state, the damping valve 161 of the damping unit 50 is positioned at the first restricting position 161A under the biasing force exerted by the spring 162. Thus, as the shock absorber 100 is extended/contracted in the extended state, the damping force is generated based on the damping characteristic in accordance with the pressure loss characteristic at the first restricting position 161A.

When the shock absorber 200 is shifted to the relatively contracted state, the lever part 166 is pushed by the projecting portion 120 of the cylinder tube 10, and the damping valve 161 is switched to the second restricting position 161B. Thus, as the shock absorber 200 is extended/contracted in the contracted state, the damping force is generated based on the damping characteristic in accordance with the pressure loss characteristic at the second restricting position 161B.

As described above, with the shock absorber 200, because the damping unit 150 is provided in the head portion 23, even if it has a complex configuration having the damping valve 161, the switching portion 165, and so forth, it is possible to assemble the damping unit 150 to the shock absorber 100 with ease. In this embodiment, as the stroke region of the piston rod 20 is changed, the position of the damping valve 161 is switched to change the damping characteristic of the damping force generated by the shock absorber 200. Thus, it is possible to achieve the configuration in which the pressure loss characteristic at the first restricting position 161A of the damping valve 161 is set such that the damping characteristic suitable for the case in which the shock absorber 100 is in the extended state can be obtained, and in which the pressure loss characteristic at the second restricting position 161B is set such that the damping characteristic suitable for the case in which the shock absorber 100 is in the contracted state can be obtained. With such a configuration, it is possible to generate the damping force suitable for the situations of the object to which the shock absorber 100 is to be attached.

In this embodiment, the lever part 166 has the configuration in which the projecting portion 120 of the cylinder tube 10 comes to direct contact with the lever part 166 and the lever part 166 is pushed by the projecting portion 120. However, the configuration is not limited thereto, and for example, it may be possible to employ a configuration in which the lever part 166 is pushed by a magnetic force (a repulsive force) of a magnet provided on the cylinder tube 10. In other words, the switching portion may have a configuration in which it is switched by being pushed by the cylinder tube 10 in a non-contacting manner.

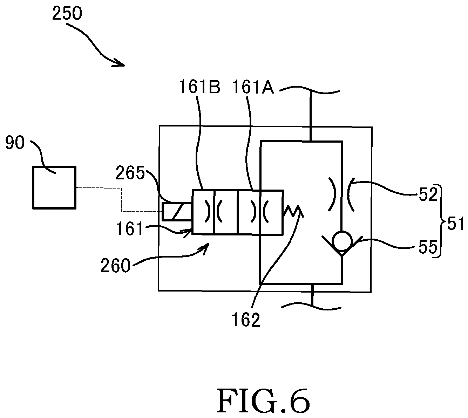

Next, a modification of the second embodiment will be described with reference to FIG. 6.

In the above-described second embodiment, the damping unit 150 has the switching portion 165 that switches the position of the damping valve 161 by being pushed by the cylinder tube 10 as the piston rod 20 enters inside the cylinder tube 10. With such a configuration, the shock absorber 200 generates the damping force with different damping characteristics between the relatively extended state and contracted state.

In contrast, a damping unit 250 according to the modification shown in FIG. 6 has, instead of the switching portion 165, a solenoid portion 265 that is driven by being energized and switches the position of the damping valve 161.

The solenoid portion 265 moves the valve body of the damping valve 161 against the biasing force exerted by the spring 162 when an electric signal is input from a controller 90. Thereby, the position of the damping valve 161 is switched from the first restricting position 161A to the second restricting position 161B. In a state in which the power is shut off for the solenoid portion 265, the damping valve 161 is switched to the first restricting position 161A by the biasing force exerted by the spring 162.

According to the modification as described above, the similar effects as those of the above-described second embodiment can be afforded, and at the same time, the advantages described below are afforded.

With the modification shown in FIG. 6, because it has the configuration in which the position of the damping valve 161 is switched by the solenoid portion 265, no limitation is placed by the stroke region of the piston rod 20, and it is possible to change the damping characteristics of the damping valve 161 even in other various situations. For example, it is possible to change the damping characteristic in accordance with a driving condition of the vehicle such as steering operation of the vehicle, road surface conditions, and so forth. As described above, because the damping characteristics of the shock absorber 200 can be changed at any given timing, a convenience thereof is improved.

In the following, the configurations, operations, and effects of the respective embodiments of the present invention will be collectively described.

The shock absorber 100, 200 includes: the cylinder tube 10; the piston rod 20 inserted into the cylinder tube 10 so as to be freely movable back and forth; the piston 30 connected to the piston rod 20, the piston 30 being configured to partition the interior of the cylinder tube 10 into the rod-side chamber 2 and the bottom-side chamber 1; and the damping unit 50, 150, 250 configured to generate the damping force by imparting the resistance to the flow of the working fluid between the rod-side chamber 2 and the bottom-side chamber 1, wherein the piston rod 20 has the rod portion 21 connected to the piston 30 and supported so as to be feely slidable with respect to the cylinder tube 10 and the head portion 23 exposed to the outside of the cylinder tube 10, and wherein the damping unit 50, 150, 250 is provided in the head portion 23 of the piston rod 20.

In this configuration, the damping unit 50, 150, 250 is provided in the head portion 23 of the piston rod 20, and thereby, it is possible to secure the installation space for the damping unit 50, 150, 250 with ease.

In addition, in the shock absorber 100, 200, the piston rod 20 is formed with: the rod inner chamber 2a formed inside the rod portion 21; the first communicating passages 22 configured to guide the working oil between the rod-side chamber 2 and the rod inner chamber 2a; and the second communicating passages 46a and 46b configured to guide the working oil between the rod inner chamber 2a and the damping unit 50, 150, 250, and the piston rod 20 further has the pipe portion 27 accommodated in the rod inner chamber 2a and configured to guide the working oil between the bottom-side chamber 1 and the damping unit 50, 150, 250.

In this configuration, it is possible to secure the installation space for the damping unit 50, 150, 250 even with the so-called internal piping type, in which the flow path, through which the bottom-side chamber 1 is communicated with the rod-side chamber 2, is provided inside the shock absorber 100, 200.

In addition, in the shock absorber 100, 200, the damping unit 50, 150, 250 has the first resistance portion 51 and the second resistance portion 60, 160, 260, the first resistance portion 51 and the second resistance portion 60, 160, 260 being configured to respectively impart the resistance to the flow of the working fluid, and the first resistance portion 51 is configured to impart the resistance only to the flow of the working oil flowing from the one of the rod-side chamber 2 and the bottom-side chamber 1 towards the other thereof.

In this configuration, because the installation space for the damping unit 50, 150, 250 can be secured, it is possible to provide two resistance portions, the first resistance portion 51 and the second resistance portion 60, 160, 260, and to change the damping force between the contraction and the extension of the shock absorber 100, 200.

In addition, in the modification of the shock absorber 100 according to the first embodiment, the damping unit 50 has the second orifice 61a configured to impart variable resistance to the flow of the working oil passing therethrough.

In this configuration, because the damping force generated by the damping unit 50 can be adjusted, it is possible to generate the damping force in accordance with the product in which the shock absorber is used and a using situations thereof.

In addition, in the shock absorber 200 according to the second embodiment, the damping unit 150 has the damping valve 161 configured such that the resistance imparted to the working fluid is changed depending on the position and the switching portion 165 configured to switch the position of the damping valve 161 by being pushed by the cylinder tube 10 as the piston rod 20 enters the cylinder tube 10.

In this configuration, it is possible to change the damping characteristic of the damping force generated by the damping unit 150 in accordance with the stroke of the piston rod 20 of the shock absorber 100. Thus, the shock absorber 200 can generate the suitable damping force in accordance with the stroke.

In addition, in the shock absorber 200 according to the modification of the second embodiment, the damping unit 250 has the damping valve 161 configured such that the resistance to be imparted to the working fluid is changed depending on the position thereof and the solenoid portion 265 configured to be driven by being energized and to switch the position of the damping valve 161.

With the present invention, because the damping force generated by the damping valve 161 can be adjusted at any given timing by energization to the solenoid portion 265, the convenience thereof is improved.

Embodiments of this invention were described above, but the above embodiments are merely examples of applications of this invention, and the technical scope of this invention is not limited to the specific constitutions of the above embodiments.

This application claims priority based on Japanese Patent Application No.2021-49215 filed with the Japan Patent Office on March 23, 2021, the entire contents of which are incorporated into this specification.

## Claims

1. A fluid pressure dumper comprising:
a cylinder tube;
a piston rod inserted into the cylinder tube so as to be freely movable into and out of the cylinder tube;
a piston connected to the piston rod, the piston being configured to partition an interior of the cylinder tube into a rod-side chamber and a bottom-side chamber; and
a damping unit configured to generate damping force by imparting resistance to a flow of working fluid between the rod-side chamber and the bottom-side chamber, wherein
the piston rod has
a rod portion connected to the piston and supported so as to be feely slidable with respect to the cylinder tube and
a head portion exposed to outside of the cylinder tube, and wherein
the damping unit is provided in the head portion of the piston rod.

2. The fluid pressure dumper according to claim 1, wherein
the piston rod is formed with: a rod inner space formed inside the rod portion; a first communicating passage configured to guide the working fluid between the rod-side chamber and the rod inner space; and a second communicating passage configured to guide the working fluid between the rod inner space and the damping unit, and
the piston rod further has a flow path portion accommodated in the rod inner space and configured to guide the working fluid between the bottom-side chamber and the damping unit.

3. The fluid pressure dumper according to claim 1 or 2, wherein
the damping unit has a first resistance portion and a second resistance portion, the first resistance portion and the second resistance portion being configured to respectively impart resistance to flow of the working fluid, and
the first resistance portion is configured to impart the resistance only to the flow of the working fluid flowing from one of the rod-side chamber and the bottom-side chamber to the other thereof.

4. The fluid pressure dumper according to claim 1 or 2, wherein
the damping unit has a variable restrictor portion configured to impart variable resistance to the flow of the working fluid passing therethrough.

5. The fluid pressure dumper according to claim 1 or 2, wherein
the damping unit has
a damping valve configured such that the resistance to be imparted to the working fluid is changed depending on a position, and
a switching portion configured to switch the position of the damping valve by being pushed by the cylinder tube as the piston rod enters the cylinder tube.

6. The fluid pressure dumper according to claim 1 or 2, wherein
the damping unit has
a damping valve configured such that the resistance to be imparted to the working fluid is changed depending on a position, and
a solenoid portion configured to be driven by being energized and to switch the position of the damping valve.
